Europäisches Patentamt

European Patent Office

Office européen des brevets

(19)

(11) Veröffentlichungsnummer : **0 155 262**
.**B1**

(12) **EUROPÄISCHE PATENTSCHRIFT**

(45) Veröffentlichungstag der Patentschrift :
26.04.89

(21) Anmeldenummer : 83901694.6

(22) Anmeldetag : 30.05.83

(86) Internationale Anmeldenummer :
PCT/AT 83/00015

(87) Internationale Veröffentlichungsnummer :
WO/8402174 (07.06.84 Gazette 84/14)

(51) Int. Cl.⁴ : **F 23 J 15/00, F 23 L 15/04**

(54) VERFAHREN UND VORRICHTUNG ZUM WIEDERAUFHEIZEN ENTSCHWEFELTER RAUCHGASE.

(30) Priorität : 01.12.82 AT 4368/82
04.03.83 AT 767/83
17.03.83 AT 948/83

(43) Veröffentlichungstag der Anmeldung :
25.09.85 Patentblatt 85/39

(45) Bekanntmachung des Hinweises auf die Patenterteilung : 26.04.89 Patentblatt 89/17

(84) Benannte Vertragsstaaten :
BE CH DE FR GB LI LU NL SE

(56) Entgegenhaltungen :
DE--A-- 3 110 361
FR--A-- 1 315 440
GB--A-- 2 090 959
US--A-- 3 320 906
US--A-- 3 530 806
US--A-- 3 986 848
US--A-- 4 149 453
US--A-- 4 245 569

(73) Patentinhaber : STEIRISCHE WASSERKRAFT- UND
ELEKTRIZITÄTS-AKTIENGESELLSCHAFT
Leonhardgürtel 10
A-8010 Graz (AT)

(72) Erfinder : MÄRZENDORFER, Hans
Am Ragnitzbach 5
A-8010 Graz (AT)
Erfinder : SCHALLER, Werner
Dr. Robert-Griedl-Weg 6
A-8301 Autal (AT)

(74) Vertreter : Melzer, Wolfgang, Dipl.-Ing. et al
Patentanwälte Dipl.-Ing. Erich Barger Dipl.-Ing. Hermann Krick Dipl.-Ing. H. Mitscherlich et al. Postfach
26 01 32
D-8000 München 26 (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

EP 0 155 262 B1

## Beschreibung

Die Erfindung betrifft ein Verfahren und eine Vorrichtung nach den Oberbegriffen der Ansprüchen 1 bzw. 4.

Ein Verfahren und eine Vorrichtung dieser Arten sind aus der DE-A-3 110 361 zu entnehmen. Gemäß Fig. 1 dieser Druckschrift wird dem Luftvorwärmer nicht nur die zur Verbrennung erforderliche Luftmenge zugeführt, sondern etwa um 18 % mehr, die hinter dem Luftvorwärmer entnommen und bei vier den Rauchgasen hinter der Rauchgasentschwefelungsanlage zugemischt wird. Da jedoch üblicherweise die Frischluft unter dem Dach des Kesselhauses entnommen wird, weist die Frischluft bei Eintritt in den Luftvorwärmer wegen der größeren eingezogenen Luftmenge nicht die erwünschten 30 °C, sondern nur 26 °C auf. Damit die Frischluft wieder auf die erwünschten 350 °C erwärmt wird, muß der Luftvorwärmer eine höhere Leistung erbringen. Die Rauchgase werden mit 470 °C zugeführt, damit sie den Luftvorwärmer wieder mit den erwünschten 140 °C verlassen können. Die Temperatur des die Entschwefelungsanlage verlassenden Rauchgases von 52 °C wird durch die Beimischung von 18 % der Frischluft mit 350 °C auf 93 °C erhöht. Der erhöhte Wärmebedarf muß dem Kessel entnommen werden. Die Wärmebilanz ergibt, daß mit der Frischluft wieder 19 Wärmeeinheiten und durch die Rauchgase 349 Wärmeeinheiten aufgebracht werden, von denen 227 mit der erwärmten Frischluft den Brennern zugeleitet werden und 141 Wärmeeinheiten den Kamin verlassen.

Gemäß Fig. 2 von DE-A-3 110 361 bleibt die Leistung des Luftvorwärmers unverändert, dafür aber wird die Frischluft in einem Wärmetauscher mittels Turbinenanzapfdampf zusätzlich vorgewärmt. Die Frischluft tritt in den Wärmetauscher mit 26 °C ein und verläßt ihn mit 80 °C. Dadurch können den Luftvorwärmer die Rauchgase mit 417 °C zugeführt werden.

Wir sich aus diesem Stand der Technik ergibt, mußten bisher zur Wiedererwärmung der gereinigten Rauchgase hinter der Entschwefelungsanlage fremde Wärme zugeführt oder größere Brennstoffmengen aufgewendet werden.

Die Erfindung bezweckt, ein Verfahren und eine Vorrichtung der eingangs bezeichneten Art zu schaffen, bei denen die zusätzliche Vorwärmung der Frischluft ohne zusätzlichen Energieaufwand erfolgt.

Diese Aufgabe wird durch die kennzeichnenden Merkmale der Ansprüche 1 bzw. 4 gelöst. Beiden erfindungsgemäßen Lösungen ist gemeinsam, daß die Luft im zusätzlichen Kaltluftvorwärmer so stark vorgewärmt wird, daß sie den Luftvorwärmer trotz ihrer vergrößerten Menge mit der vorgeschriebenen Temperatur verläßt. Es wird daher weder der Brennstoffbedarf erhöht, noch ist Fremdenergie notwendig. Dabei werden die Rauchgase zwischen der Vorwärmung der Luft und deren zusätzlicher Vorwärmung entstaubt, wodurch eine Verkrustung des zusätzlichen Luftvorwärmers vermieden wird. Es ist außerdem eine Anlagerung von Gips hinter der Entschwefelungsanlage an Wärmeübergangsflächen vermieden. Bei günstiger Auslegung der Anlage kann es durch die Erfindung völlig überraschend auch zu einer Erhöhung des Gesamtwirkungsgrades kommen.

Der durch das Entstauben bedingte Druckabfall macht gegebenenfalls einen Ausgleich desselben erforderlich.

Das Verfahren und die Vorrichtung eignen sich für alle Arten der Entschwefelung der Rauchgase, wobei eine weitgehende Temperaturregelung der in die Entschwefelungsanlage eintretenden Rauchgase vorteilhaft ist. Hierbei ist es wichtig, diese Regelung in einer Form durchzuführen, daß die Wärmetauscher mit gutem Wirkungsgrad arbeiten. Dies kann dadurch erreicht werden, daß ein Teil der für die Wiedererwärmung der Rauchgase nach ihrer Entschwefelung vorgesehenen Heißluft zur Aufwärmung der Frischluft verwendet wird. Zur Durchführung des Verfahrens kann eine ein Regel- bzw. Absperrorgan aufweisende Verbindungsleitung zwischen der Frischluftleitung und der Heißluftleitung vorgesehen sein.

Die Erfindung läßt es zu, einen der beiden rauchgasbeaufschlagten Wärmetauscher zu überbrücken, weshalb entsprechende Umgehungsleitungen samt den erforderlichen Regel- bzw. Absperrorganen vorgesehen sein können.

Nachfolgend wird die Erfindung anhand von mehreren, in einer Zeichnung dargestellten Ausführungsbeispielen erläutert. Es zeigt :

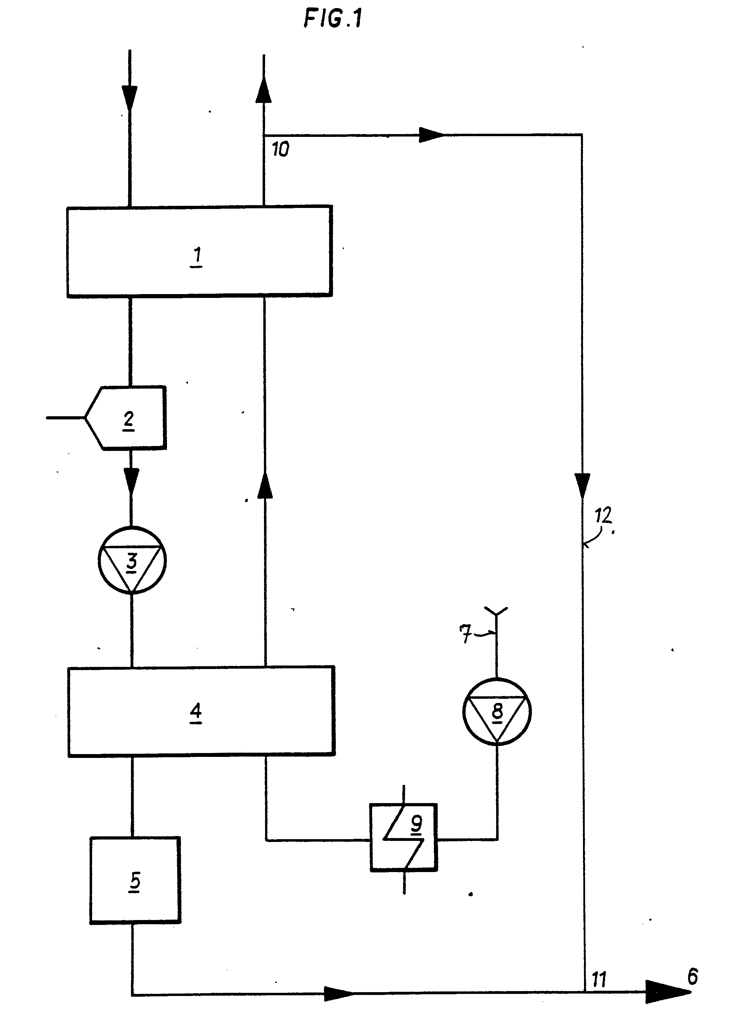

Fig. 1 eine erfindungsgemäße Vorrichtung in schematischer Darstellung mit mehreren Luftvorwärmern zum Wiederaufheizen entschwefelter Rauchgase ;

Fig. 2 eine Variante der Vorrichtung mit abschaltbaren Baueinheiten ;

Fig. 3 eine erfindungsgemäße Vorrichtung als Kompaktanlage.

Die ungereinigten heißen Rauchgase gelangen nach dem Verlassen eines Dampferzeugers zunächst in einen Luftvorwärmer 1, wo sie sich abkühlen und die bereits vorgewärmte Frischluft auf Brennraumeintrittemperatur erwärmen. Sodann gelangen die Rauchgase zu einem Staubfilter 2 und zu einem den entstandenen Druckverlust mindernden oder ausgleichenden Saugzuggebläse 3. Anschließend erwärmen in einem weiteren Wärmetauscher bzw. Kaltluftvorwärmer 4 die Rauchgase die in einer Frischluftzuleitung 7 zugeführte Frischluft vor bis die Rauchgase unter weiterer Abkühlung die zum Eintritt in eine Rauchgas Entschwefelungsanlage 5 geeignete Temperatur erreicht haben. Nach Verlassen der Entschwefelungsanlage 5 sind die Rauchgase zwar gereinigt, aber zu kalt, um durch den Schornstein ins Freie gelassen zu werden, da sie schon zu knapp am Taupunkt liegen. Deshalb wird bei 11 reine Heißluft in dem Maße zugesetzt, daß Tieftemperaturkorrosion im Schornstein 6 sicher verhindert werden kann.

Der Weg der Frischluft führt vom Außengebiet durch ein Frischluftgebläse 8 und einen Dampfluftvorwärmer 9 zum Kaltluftvorwärmer 4, wo die Frischluft weiter erwärmt wird. Im Luftvorwärmer 1 erreicht die Frischluft jene Temperatur, die zur Einbringung in den Verbrennungsraum gewünscht ist und von der jeweiligen Kesselauslegung abhängt. Am Abzweig 10, der hinter dem Luftvorwärmer 1 liegt, wird diejenige Frischluftmenge, die die zur Verbrennung notwendige Frischluftmenge übersteigt, als Heißluft abgezweigt und mittels einer Heißluftleitung 12 bei 11 den gereinigten kalten Rauchgasen zugeführt.

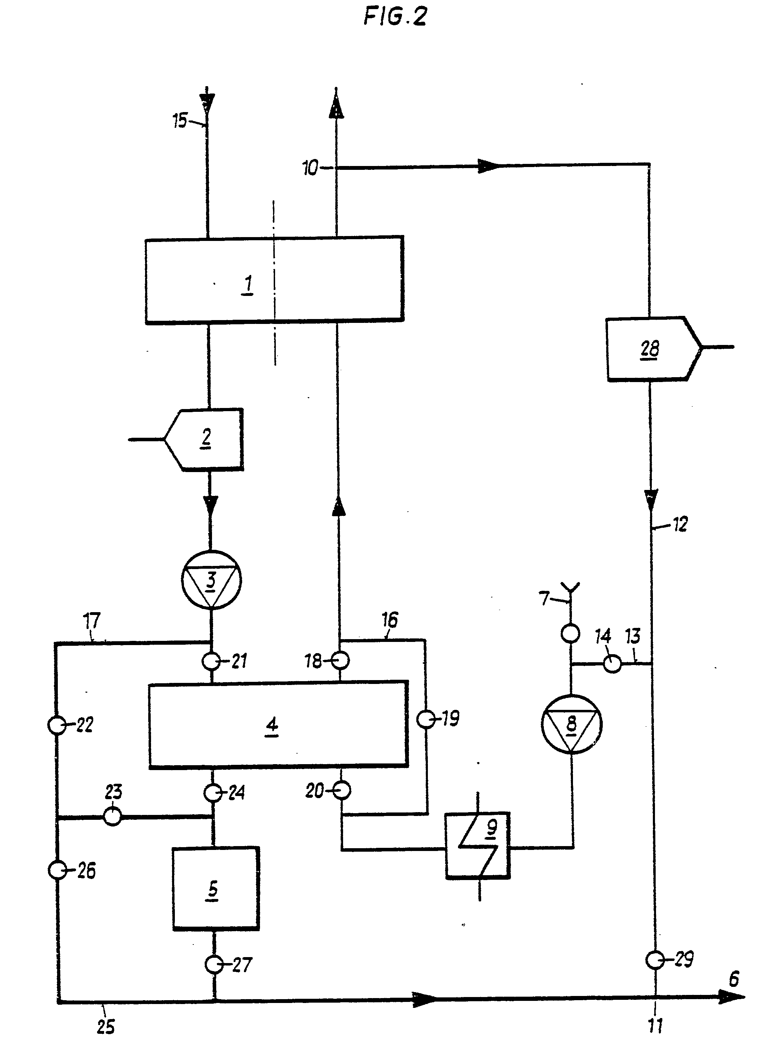

Gemäß Fig. 2 sind zwischen den beiden von den Rauchgasen beaufschlagten Luftvorwärmern 1 und 4 ebenfalls ein Staubfilter 2 und ein Saugzuggebläse 3 angeordnet. Die Rauchgase durchströmen sodann eine Entschwefelungsanlage 5 und gelangen als gereinigte, kalte Rauchgase zu einer Stelle 11, an der eine Heißluftleitung 12 mündet, die bei 10 von einer Frischluftzuleitung 7 abzweigt. Die Frischluftzuleitung 7 weist ein Frischluftgebläse 8 auf und gelangt in einen vom Turbinenanzapfdampf betriebenen Dampfluftvorwärmer 9. Die Frischluft durchströmt sodann Wärmetauscher in Form von Luftvorwärmerer 1 und 4 und wird den Brennern zugeführt.

Zwischen der Heißluftleitung 12 und der Frischluftzuleitung 7 ist eine Verbindungsleitung 13 vorgesehen, die mit einem Regel- bzw. Absperrorgan 14 versehen ist. Dadurch kann ein Teil der die Heißluftleitung 12 durchströmenden heißen Luft der Frischluftzuleitung 7 zugeführt werden. Damit wird die Leistung der beiden Luftvorwärmer 4 und 1 beeinflußt. Sowohl der Frischluftzuleitung 7 als auch der Rauchgasleitung 15 ist je eine den Luftvorwärmer 4 umgehende Umgehungsleitung 16, 17 zugeordnet, wobei zur Steuerung der Frischluft- bzw. Rauchgasströme Regel- bzw. Schaltorgane 18 bis 24 in den Umgehungsleitungen 16, 17 und zwischen deren Abzweigen und dem Kaltluftvorwärmer 4 vorgesehen.

Es ist zweckmäßig, auch für die Entschwefelungsanlage 5 einen Bypass 25 mit den erforderlichen Regel- bzw. Schaltorganen 26, 27 anzuordnen.

Erforderlichenfalls kann in der Heißluftleitung 12 ein Staubfilter 28 vorgesehen werden. Die Heißluftleitung 12 weist vor ihrer Einmündung in die Rauchgasleitung 15 hinter der Entschwefelungsanlage 5 ein Regel- bzw. Schaltorgan 29 auf.

Die erfindungsgemäße Ausgestaltung gestattet es, die Eintrittstemperatur der Rauchgase in die Entschwefelungsanlage 5 in weiten Grenzen zu variieren und hierbei stets einen hohen Wirkungsgrad der Anlage zu gewährleisten.

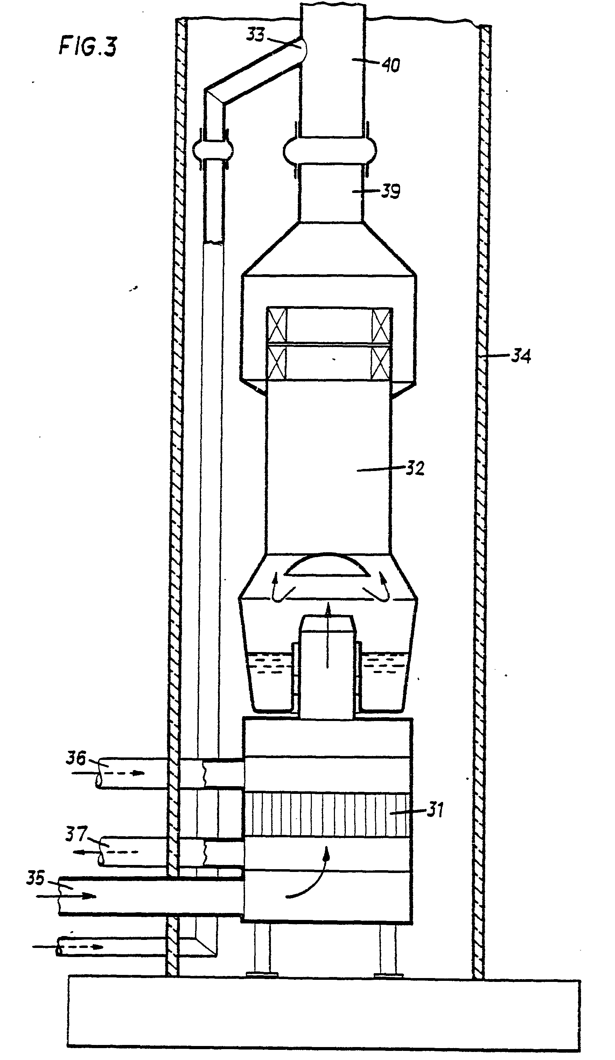

Eine strömungstechnisch günstige Bauweise zeigt Fig. 3.

Eine die heißen, noch schwefelhaltigen Rauchgase führende Rauchgasleitung 35 mündet in einen Wärmetauscher 31, in dem die eingeleiteten Rauchgase einen Teil ihrer Wärme an im Gegenstrom geführte Frischluft abgeben. Diese wird mittels Leitungen 36, 37 zu- und abgeführt. Die Rauchgase gelangen anschließend in eine Entschwefelungsanlage 32, werden dort vorzugsweise im Naßverfahren entschwefelt und verlassen die Entschwefelungsanlage 32 an deren Kopf 39, an den sich ein Mischrohr 40 anschließt. In diesem Bereich wird den Rauchgasen heiße Luft durch eine Luftleitung 33 zugeführt, wodurch sie sich erwärmen und so den notwendigen Zug zum Durchströmen des Kamins 34 herbeiführen. Die Anordnung des Wärmetauschers der Entschwefelungsanlage und des Mischrohres ist von unten nach oben fluchtend im unteren Teil des Kamins 34 untergebracht, so daß sich eine sehr kompakte Anordnung ergibt.

Die Zuführung der Heißluft zum Mischrohr 40 kann natürlich auch abweichend vom gezeigten Ausführungsbeispiel mittels mehrerer, symmetrisch angeordneter Düsen erfolgen, die so gerichtet sind, daß sie auf das Rauchgas einen zusätzlichen Impuls in Strömungsrichtung übertragen.

Der Wärmetauscher 31 ist vorzugsweise ein Regenerativwärmetauscher, der als Wärmeträgermaterial aus Korrosionsgründen keramische Einbauten oder keramisches Schüttgut aufweist. Synchron drehbare, achsial benachbarte Kulissen auf beiden Seiten des Wärmeträgermaterials trennen den Rauchgasstrom vom Luftstrom, und fest eingebaute Kulissen im Bereich des Wärmeträgermaterials verhindern eine Durchmischung der beiden Gasströme.

Die Entschwefelungsanlage 32 ist vorzugsweise eine Naßentschwefelungsanlage bekannter Bauart, bei der sich ein Tröpfchenschleier geeigneter chemischer Zusammensetzung zufolge der Gravitation von oben nach unten im Gegenstrom zum Rauchgas bewegt und dieses entschwefelt.

Um an Kaminhöhe zu sparen, kann die erfindungsgemäße Anordnung in den Boden vertieft aufgestellt werden. Die einzelnen Teile der Anordnung müssen nicht gleichachsig zueinander sein. Sie können auch schräg oder teilweise nebeneinander vorgesehen werden. Hierbei ist auf einen geringen Strömungswiderstand der Luft- und Rauchgasströme zu achten.

Im Rahmen der Erfindung können die Zuleitungen und die Ableitungen in Abhängigkeit den örtlichen Gegebenheiten variiert werden.

## Patentansprüche

1. Verfahren zum Wiederaufheizen entschwefelter Rauchgase eines Verbrennungsprozesses, bei dem eine größere als zur Verbrennung erforderliche Menge Luft mittels eines Wärmetauscher (1) durch die Rauchgase erhitzt und die überschüssige Heißluftmenge den gereinigten und abgekühlten Rauchgasen beigemengt wird, wobei dem Wärmetauscher (1) bereits erwärmte Frischluft zugeführt wird, dadurch gekennzeichnet, daß auch die zusätzliche Vorwärmung der Luft mittels der Rauchgase vor deren Eintritt in die Entschwefelungsanlage (5) vorgenommen wird und die Rauchgase zwischen der Vorwärmung der Luft und deren zusätzlichen Vorwärmung entstaubt werden.

2. Verfahren nach Anspruch 1, dadurch gekennzeichnet, daß der auftretende Druckverlust mittels eines hinter einem Staubfilter (2) angeordneten Gebläuses (3) ausgeglichen wird.

3. Verfahren nach Anspruch 1 oder 2, dadurch gekennzeichnet, daß die Rauchgase in der Entschwefelungsanlage (5) im Naßverfahren entschwefelt werden.

4. Vorrichtung zur Durchführung des Verfahrens nach wenigstens einem der Ansprüche 1 bis 3, mit einem Luftvorwärmer (1) und einem zusätzlichen Kaltluftvorwärmer (4) sowie mit einer Rauchgasentschwefelungsanlage (5), bei der eine Heißluftleitung (12), die einen Teil der im Luftvorwärmer (1) erwärmten Luft den gereinigten Rauchgasen an einer Stelle (11) hinter der Entschwefelungsanlage (5) zuführt, vorgesehen ist, dadurch gekennzeichnet, daß der Kaltluftvorwärmer (4) rauchgasdurchströmt und rauchgasseitig vor der Entschwefelungsanlage (5) angeordnet ist.

5. Vorrichtung nach Anspruch 4, dadurch gekennzeichnet, daß eine ein Regel- bzw. Absperrorgan (14) aufweisende Verbindungsleitung (13) zwischen der Frischluftleitung (7) und der Heißluftleitung (12) vorgesehen ist und erforderlichenfalls die Heißluftleitung (12) mit einem Regel- bzw. Schaltorgan (29) zwischen der Verbindungsleitung (13) und der Mündungsstelle (11), an der die Heißluftleitung (12) in den Rauchgasstrom mündet, versehen ist.

6. Vorrichtung nach Anspruch 4 oder 5, bei der im unteren Teil eines Kamins (34) eine Rauchgasentschwefelungseinrichtung (32) vorgesehen ist, an die sich nach oben eine Vorrichtung (40) zum Einleiten heißer Luft in das gereinigte Rauchgas anschließt, dadurch gekennzeichnet, daß unterhalb der Entschwefelungseinrichtung (32), bevorzugt fluchtend, ein im wesentlichen prismatischer oder zylinderförmiger Regenerativvorwärmer (31) als Kaltluftvorwärmer (4) angeordnet ist und die Vorrichtung (40) zum Einleiten der heißen Luft mehrere, symmetrisch angeordnete Düsen (33) aufweist, die so gerichtet sind, daß die einströmende Luft einen zusätzlichen Impuls in Strömungsrichtung des Rauchgases auf dieses überträgt.

**Claims**

1. A method of reheating desulphurized flue gases from a combustion process, in which a larger quantity of air than is required for combustion is heated by the flue gases by means of a heat exchanger (1) and the excess amount of hot air is added to the purified and cooled flue gases, fresh air that has already been heated being fed to the heat exchanger (1), characterised in that the additional preheating of the air by means of the flue gases is also effected before their entry to the desulphurization plant (5) and the dust is extracted from the flue gases between the preheating of the air and the additional preheating thereof.

2. A method according to claim 1, characterised in that the pressure loss occurring is compensated for by means of a blower (3) disposed downstream of a dust filter (2).

3. A method according to claim 1 or 2, characterised in that the flue gases are desulphurized by the wet process in the desulphurization plant (5).

4. Apparatus for performing the method according to at least one of claims 1 to 3, comprising an air preheater (1) and an additional cold air preheater (4) and a flue gas desulphurization plant (5), in which there is provided a hot-air line (12) which feeds some of the air heated in the air preheater (1) to the purified flue gases at a place (11) downstream of the desulphurization plant (5), characterised in that the cold air preheater (4) has flue gases flowing through it and is disposed upstream of the desulphurization plant (5) on the flue gas side.

5. Apparatus according to claim 4, characterised in that a connecting line (13) containing a control or shut-off means (14) is provided between the fresh air line (7) and the hot air line (12) and, if necessary, the hot-air line (12) is provided with a control or actuating means (29) between the connecting line (13) and the place (11) where the hot-air line (12) leads into the flue gas flow.

6. Apparatus according to claim 4 or 5, in which the bottom part of a chimney (34) contains a flue gas desulphurizer (32) adjacent which at the top there is provided a means (40) for introducing hot air into the purified flue gas, characterised in that a substantially prismatic or cylindrical regenerative preheater (31) is provided as a cold-air preheater (4) beneath the desulphurizer (32), preferably in alignment therewith, and the means (40) for introducing the hot air comprises a plurality of symmetrically disposed nozzles (33) so directed that the incoming air transmits an additional surge to the flue gas in the direction of flow thereof.

**Revendications**

1. Procédé de réchauffage de fumées désulfurées d'un processus de combustion, dans lequel un débit d'air, supérieur à celui nécessaire pour la combustion, est réchauffé par les fumées au moyen d'un échangeur de chaleur (1) et dans lequel on ajoute le débit d'air chaud en excès aux fumées épurées et refroidies, étant précisé que l'on a déjà amené de l'air frais réchauffé à l'échangeur de chaleur (1), caractérisé en ce que l'on procède au préchauffage complémentaire de l'air au moyen des fumées avant son entrée dans l'installation de désulfuration (5) et en ce que les fumées sont dépoussiérées entre le préchauffage de l'air et son préchauffage complémentaire.

2. Procédé selon la revendication 1, caractérisé en ce que l'on compense la perte de pression qui apparaît au moyen d'un ventilateur (3) disposé derrière un filtre de dépoussiérage (2).

3. Procédé selon la revendication 1 ou 2, caractérisé en ce que l'on désulfure les fumées dans l'installation de désulfuration (5) par un procédé à sec.

4. Installation pour l'exécution du procédé selon au moins l'une des revendications 1 à 3, comportant un préchauffeur d'air (1) et un préchauffeur complémentaire d'air froid (4) ainsi qu'une installation (5) de désulfuration des fumées, installation dans laquelle on prévoit une conduite d'air chaud (12) qui amène à un endroit (11) situé derrière l'installation (5) de désulfuration une partie de l'air réchauffé dans le préchauffeur d'air (1), caractérisée en ce que le préchauffeur d'air froid (4) est parcouru par les fumées et en ce qu'il est disposé avant l'installation de désulfuration (5), côté fumées.

5. Installation selon la revendication 4, caractérisée en ce qu'il est prévu, entre la conduite d'air frais (7) et la conduite d'air chaud (12), une conduite de liaison (13) comportant un organe (14) de régulation ou d'obturation ; et en ce que, si nécessaire, la conduite d'air chaud (12) est prévue avec un organe (29) de régulation ou de commutation placé entre la conduite de liaison (13) et l'endroit (11) où la conduite d'air chaud (12) débouche dans le flux des fumées.

6. Installation selon les revendications 4 ou 5, dans laquelle est prévue, dans la partie inférieure d'une cheminée (34), une installation (32) de désulfuration des fumées à laquelle se raccorde vers le haut un organe (40) permettant d'introduire de l'air chaud dans les fumées épurées, caractérisée en ce qu'en dessous de l'installation de désulfuration (32), de préférence dans l'alignement, est disposé un préchauffeur par régénération (31), de forme sensiblement prismatique ou cylindrique, servant de préchauffeur d'air froid (4) ; et en ce que l'organe (40) prévu pour introduire de l'air chaud présente plusieurs buses (33), qui sont disposées symétriquement et dirigées de façon telle que l'air qui arrive transmet aux fumées une impulsion supplémentaire dans la direction de leur écoulement.

## FIG.1

FIG.2

FIG.3